Europäisches Patentamt

(19) European Patent Office

Office européen des brevets

(11) Publication number: **0 320 153 B1**

# EUROPEAN PATENT SPECIFICATION

(12)

(45) Date of publication of patent specification :
21.08.91 Bulletin 91/34

(21) Application number : **88311200.5**

(22) Date of filing : **25.11.88**

(51) Int. Cl.⁵ : **B01J 2/18, B05B 3/14**

(54) **Controlled break-up of liquid jets.**

(30) Priority : **07.12.87 GB 8728564**

(43) Date of publication of application :
**14.06.89 Bulletin 89/24**

(45) Publication of the grant of the patent :
**21.08.91 Bulletin 91/34**

(84) Designated Contracting States :
**AT BE CH DE ES FR GB GR IT LI LU NL SE**

(56) References cited :
EP-A- 0 233 384
FR-A- 1 296 906
FR-A- 2 268 556

(73) Proprietor : **IMPERIAL CHEMICAL INDUSTRIES PLC**
**Imperial Chemical House, Millbank**
**London SW1P 3JF (GB)**

(72) Inventor : **Oliver, Raymond**
**68 Junction Road Norton**
**Stockton-on-Tees Cleveland (GB)**
Inventor : **Lloyd-Jones, Gareth Niall**
**33 The Poplars Wolviston**
**Billingham Cleveland (GB)**

(74) Representative : **Aufflick, James Neil et al**
**Imperial Chemical Industries PLC Legal**
**Department: Patents PO Box 6 Bessemer**
**Road**
**Welwyn Garden City Herts, AL7 1HD (GB)**

EP 0 320 153 B1

Jouve, 18, rue Saint-Denis, 75001 PARIS

## Description

This invention relates to a process and apparatus for the controlled break-up of liquid jets to produce substantially spherical drops or particles and in particular to a process and apparatus for prilling molten materials.

Prilling is an operation frequently used in the production of fertilizers. It is an operation in which a molten material is caused to flow through a nozzle to form drops of the material which are cooled, e.g. by allowing the drops to fall down a tower in a counter-current flow of air, to give solid spheres or prills of the material. Usually prilling is performed by allowing molten material to flow through a plurality of nozzles, the size of the drops formed depending upon the size and type of nozzle, the nature of the material being prilled and the rate of flow of material through the nozzles. Prilling is usually performed with a flow rate of material which is sufficiently large to ensure that the material issues from the nozzles as jets which break up into drops some distance from the orifices of the nozzles. In the past there have been proposals to cause vibration of prilling nozzles by moving the spray head containing them in a vertical plane. There has also been a proposal in GB 1266874 to cause a plate situated in the pool of molten material in the spray head above the nozzles to vibrate in order to improve the uniformity in size of the prills produced particularly in the production of fertilizers.

In the production of prills of for example ammonium nitrate and urea for use as fertilizers it is important that the prills are free from dust and of a suitable size and shape for application to the land by standard fertilizer spreading equipment. The range of size distribution should be maintained as far as possible within a narrow band with fines and oversize material being kept to a minimum. Present prilling processes for fertilizers keep the size distribution within a very narrow range in comparison to other bulk particulate products. However, if the production of fertilizers is to be optimised it is desirable to provide prills having even narrower size distributions.

In particular efforts should be made to reduce the amount of oversize material which tends to arrive in a semi-molten state at the base of present prilling towers and to reduce the amount of undersize or fines which can act to degrade the overall physical quality of the product.

FR-A-2268556 attempts to reduce the amount of semi-molten material arriving at the base of the prilling tower. This reference discloses that droplets may be fully solidified before reaching the bottom of the tower by imparting a large scale movement, at a frequency of no more than 25 Hz, to the droplet forming apparatus. This large scale movement causes the droplets to be "spread out" across the full cross section of the tower allowing the cooling effect of the tower to be used more effectively.

According to the present invention we provide a process for the controlled break-up of liquid jets to produce substantially spherical drops in which a jet is caused to flow through an orifice in a plate, characterised in that as the jet flows through the orifice the plate is caused to move reciprocally in a horizontal plane producing an asymmetric disturbance to the jet surface, and that the frequency of the reciprocal movement of the plate is determined by the expression

$$f = u_j.(4.5\ d_j)^{-1}$$

wherein f is the frequency of reciprocal movement (Hz), $u_j$ is the jet flow velocity through the orifice (m.s$^{-1}$), and $d_j$ is the orifice diameter (m).

According to another aspect of the present invention we provide a process for the controlled break-up of liquid jets to produce substantially spherical drops in which a jet is caused to flow through an orifice in a plate, characterised in that as the jet flows through the orifice the plate is caused to move reciprocally in a horizontal plane producing an asymmetric disturbance to the jet surface, and that the frequency of the reciprocal movement of the plate is between 400 and 800 Hz.

The invention is applicable to any process in which it is necessary to cause a stream of liquid to break up into drops or particles having a size distribution controlled within a particular range. Because the compounded effects of a number of factors, such as hole or nozzle geometry, hole or nozzle surface finish and imperfections, fluid flow fluctuations and the nature of the phase into which the stream emerges, an individual stream or jet behaves independently and uniquely.

In order that a more uniform and predictable behaviour be exhibited by the jet, and therefore its ability to generate droplets that fall within a desired size distribution to be determined, a controlled disturbance of a preferred amplitude is imposed onto the jet. The optimum frequency for such a controlled disturbance may be calculated using the theoretical analysis of jet instability. We have found that the controlled disturbance can be achieved by causing the stream to pass through an orifice in a plate moving in an asymmetric manner. Generally the teaching of the art is that asymmetric motion would not cause a stream to break up in a suitable manner (Lord Rayleigh : The Theory of Sound, Vol II, Published by Macmillan Co, London 1929).

However our studies indicate that this is not the case — see Example 1. Asymmetric motion applies a shear wave driven capillary instability to a liquid jet as postulated by Crane L et al : British Journal of Applied Physics, 15, p. 743 et seq, 1964 and McCormack PD et al : British Journal of Applied Physics, 16, p. 395 et seq, 1965.

Previously axisymmetric or varicose motion has been applied to plates through which streams have been passed in, for example prilling processes. This has a different effect from asymmetric motion and creates droplets by means of capillary instability triggered by surface modulation.

In particular the invention is applicable to prilling processes especially for the production of fertilizers such as ammonium nitrate and urea for fertilizer use, the production of ammonium nitrate explosives, and for the production of caustic soda. Streams of molten material are passed through spray heads, generally conical in shape, having plates with a plurality of orifices, holes or nozzles, at their lower ends. The perforated plates can be integral parts of the spray heads or can be separate parts attached to the upper parts of the spray heads by any suitable means. Movement of the plates is preferably electronically controlled. Preferably the number of holes in an individual plate is within the range $10^3$ to $4 \times 10^3$.

The movement of the plate in each direction will generally be through a very small angle, suitably within the range $10^{-5}$ to $10^{-3}$ radians.

The optimum frequency of the reciprocal motion depends upon the velocity of the jets through the orifices in a plate and the range of size distribution of prills which is required according to the following expression 1 :

$$f_{OPT} = \frac{(u_j)}{(4.5 \, d_j)} \quad 1$$

where $f_{OPT}$ is the frequency in Hertz, $u_j$ is the jet flow velocity through an orifice and $d_j$ is the orifice diameter. Generally a range of frequencies $f_{min}$ to $f_{max}$ is preferred giving particle sizes within a suitable range. Preferred frequencies are in the range 400 to 800 Hz.

The jet flow velocity depends upon the size of the holes or other orifices in the plate and upon the mass flow rate. The diameter of holes in spray head plates presently in use is usually 1.3 mm. Our tests were carried out using holes of 1.4 mm diameter. It is desirable that flow through the plate is laminar and that uniform jet flow is achieved. This is done by controlling the physical properties of the liquid phase and the geometry of the holes in the plate in a suitable manner. Suitably the Reynolds Number does not exceed 2300, preferably in the range 500 to 2000, and the liquid has a low viscosity, preferably within the range 1 to 10 CP. [Reynolds Number is defined as $\rho u_j d_j . \mu^{-1}$ ; where $\rho$ is the density of the liquid, $[kg.m^{-3}]$, $\mu$ is the viscosity of the liquid $[kg.m^{-1}.s^{-1}]$ and $u_j$, $d_j$ are hereinbefore defined].

When applied to fertilizer production the present invention makes it possible to control the size distribution of prills within a narrow range, greatly reducing the quantity of fines and oversize material which is produced. Other physical properties are also improved and the appearance of the prills is satisfactory.

In addition to its application in fertilizer production the invention is applicable to the production of ceramics, catalysts, polymers, dyes and other materials when made in substantially spherical particles.

The invention is illustrated by the accompanying figures wherein :

Figure 1 is schematic vertical section of a prilling tower, showing the typical relative positions of the sprayhead, plate and feed system,

Figure 2 is a sectional view of a perforated plate indicating the orifices,

Figure 3 is a partly sectioned side view of the sprayhead assembly.

Figure 4 is a partly sectioned plan view along line CC of the sprayhead assembly connected to the perturbation causing device,

Figure 5 is a sectioned view through a fluid jet emerging from a nozzle, the direction of flow being indicated along the axis $ZZ^1$.

Figure 6 is a microflash photograph of jets of water without the application of a controlled vibration.

Figure 7 is a microflash photograph of jets of water as produced from the apparatus used in forming the jets in Figure 6, with the application of a controlled vibration in accordance with the invention.

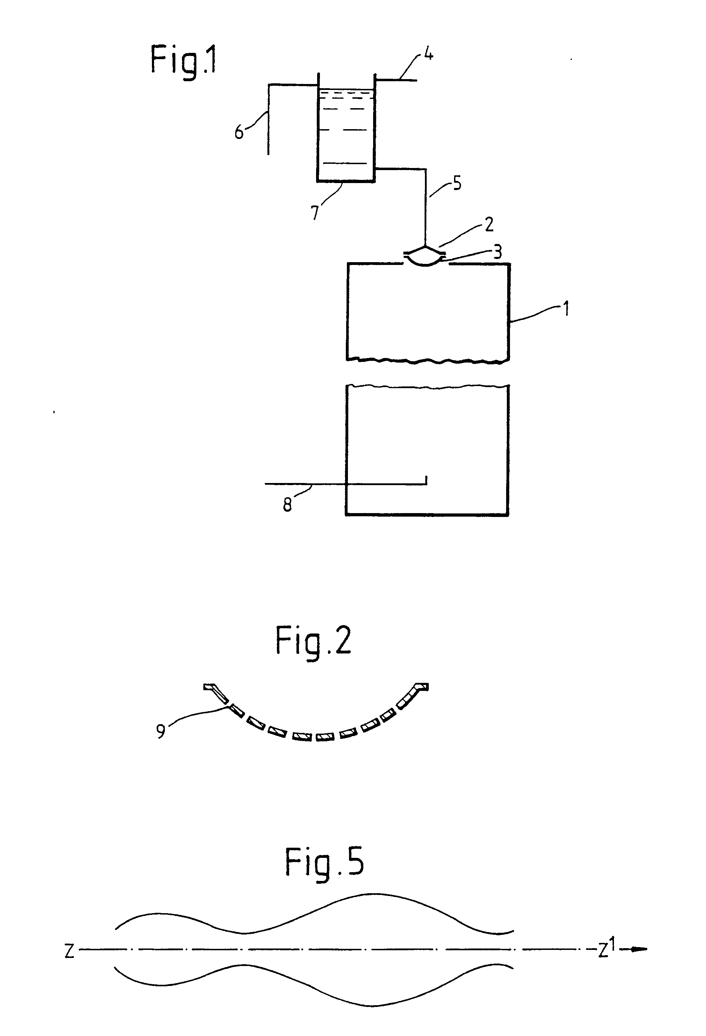

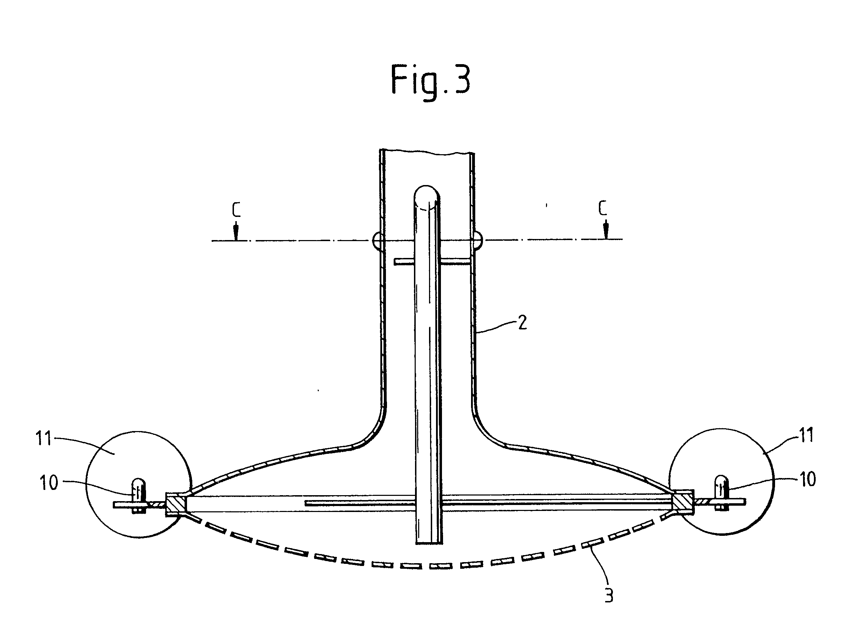

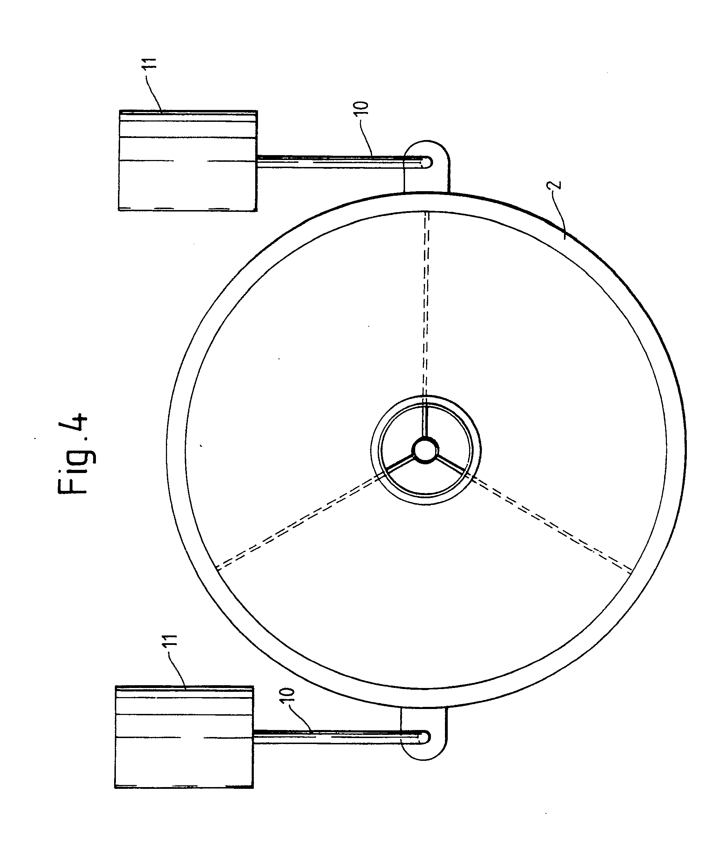

The apparatus shown in Figures 1 to 4 has a prilling column (1) at the top of which is sprayhead (2). Forming an integral part of sprayhead (2) is plate (3) perforated by holes (9). Plate (3) is connected by linkage (10) to an electronic device (11) which causes the plate (3) to move reciprocally in a horizontal plane in an asymmetric manner. Sprayhead (2) is also connected by line (5) to weir pot (7) which is fed via line (4) with molten material. An overflow line (6) rises to a desired level in weir pot (7) and when the level of molten material in weir pot (7) exceeds the desired level the excess flows out through overflow line (6). The constant level of molten material in weir pot (7) maintains a constant level of molten material in sprayhead (2). Where two electronic devices (11) are used, it is preferred that they are configured so that each reinforces the movement caused by the other.

The base of column (1) is provided with line (8) for feeding air to the column (1).

In the production of ammonium nitrate fertiliser to produce molten material to be supplied to sprayhead (2), 85-89% ammonium nitrate solution and magnesium nitrate solution (desiccant) are added together and the resulting mixed solution is concentrated in falling film evaporators. This produces a material containing 0.5% water which is near molten ammonium nitrate and which is passed to weir pot (7) and from there to sprayhead (2). Jets of the near molten ammonium nitrate pass through holes (9) in plate (3) whilst the plate (3) is moved by device (11). The jets pass down column (1) and break up into substantially evenly sized drops which solidify and are cooled by a counter-current air flow provided from line (8). The prills leaving the tower (1) are further cooled if necessary, screened and undersize and/or oversize material is removed.

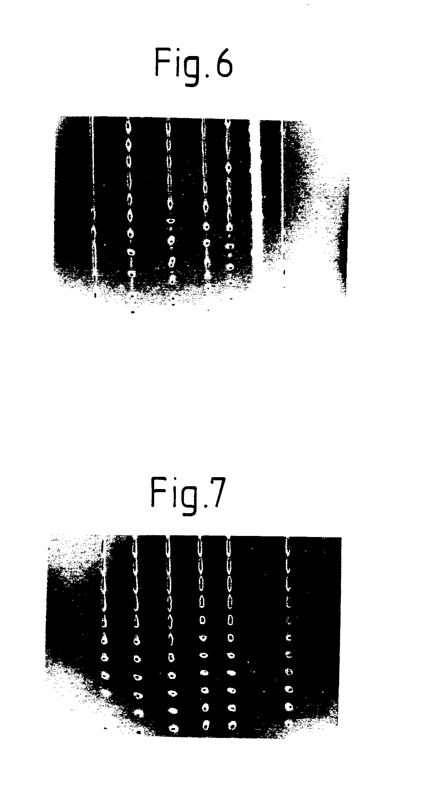

The jets of water shown in Figure 6 were produced from laboratory apparatus. For comparison of scale, a 3 mm diameter length of wire (shown as a dark vertical line) has been included in the photograph. The droplets from the breakup of the jets are seen to be non-uniform in size, and are generated in an irregular manner. In contrast, when a controlled vibration is applied to the jets, as shown in Figure 7, the droplets formed are highly uniform, and are produced at regular intervals.

If a controlled disturbance of a minimum amplitude, or greater is imposed on a fluid stream then ordered and predictable break up of the stream occurs. The value for the minimum perturbation required to initiate the break-up of a fluid stream so as to form drops can be obtained as follows.

Considering a vertically moving stream of liquid in a gravitional field, an analysis of the conservation of energy gives rise to the expression 2.

$$q^2 = \left( \frac{\gamma}{\rho\, r_j^{-3}} \right) \frac{I_1(\hat{k})}{I_0(k)} \quad \hat{k}\, (1 - \hat{k}^2) \qquad \ldots\ldots 2$$

wherein

| | |
|---|---|
| $\hat{q}$ | is the rate of growth of the amplifying capillary wave [$s^{-1}$] |
| $\hat{k}$ | is the wave number (dimensionless) and is defined by $2\pi r_j \lambda^{-1}$ |
| $r_j$ | is the initial stream radius [m] |
| $\lambda$ | is the wavelength of the disturbance [m] |
| $I_1(\hat{k}), I_0(\hat{k})$ | are the Bessel functions of the first kind |
| $\gamma$ | is the surface tension of the liquid [$N.m^{-1}$] |
| $\rho$ | is the density of the liquid [$kg.m^{-3}$] |

On differentiation, and maximisation of expression 2 with respect to $\hat{k}$, an expression 3 for the maximum value of q, hereinafter referred to as $q_{max}$ is obtained, when $\hat{k}$ is equal to 0.697.

$$q_{max} = 0.97\, \gamma^{\frac{1}{2}} \rho^{-\frac{1}{2}} d_j^{-3/2} \qquad 3$$

wherein $d_j$ is the initial stream diameter [m] and is equal to twice the initial stream radius.

The magnitude of the disturbance may be obtained from standard Fourier analysis of the amplifying capillary wave, to give expression 4.

$$r(t) = \delta_o \exp(qt) \qquad 4$$

wherein

| | |
|---|---|
| t | is time [s] |
| r(t) | is the radius of the stream at any time t [m] |
| $\delta_o$ | is the amplitude of the initiating disturbance [m] |

Disintegration of the liquid stream will occur when the amplitude of the disturbance as described by expression 3 has grown to equal the initial jet radius, $r_j$, and at a time $t_z$ so that

$$r_j = \delta_o \exp(q_{max}\, t_z) \qquad 5$$

The time at which disintegration occurs can simply be obtained from the relationship between distance from the start of the stream at which disintegration occurs, and the stream velocity.

Utilising such a relationship in expression 5 and rearranging expression 5 yields

$$l_z = \frac{u_z}{q_{max}} \ln\left(\frac{r_j}{\delta_o}\right) \qquad \ldots\ldots 6$$

wherein

$l_z$ is the distance from the start of the stream at which disintegration occurs [m]

$u_z$ is the stream velocity [m.s$^{-1}$]

further substitution for $q_{max}$ from expression 3, into expression 6 and rearrangement to obtain the minimum amplitude of the initiating disturbance that will just initiate jet gives break-up expression 7.

$$\delta_o = r_j \exp\left[-\frac{l_z}{1.03 d_j We^{0.5}}\right]$$

wherein We is the Weber number [dimensionless] as defined by

$$d_j u_j^2 \rho \, \gamma^{-1}$$

The effect of using a controlled vibration, in accordance with the above theory, was confirmed initially using laboratory apparatus with water as the liquid medium. Typical results from such experiments having been shown in Figure 7.

The following examples may further serve to illustrate the use of the theory in determining the optimum frequency for such a controlled disturbance, and the effect of applying said controlled disturbance at the frequency calculated so as to change the size distribution of the system considered.

EXAMPLE 1

In an operating unit for the production of fertiliser grade ammonium nitrate the plate (3) through which molten ammonium nitrate is prilled comprises 2500 holes of 1.4 mm diameter.

The velocity at which molten ammonium nitrate flows through each hole is 3.5 m/s.

The optimum frequency at which to apply a controlled lateral disturbance to the sprayhead (2), and hence plate (3) is given by substituting the above parameters into the previously quoted expression 1 for $f_{OPT}$ to obtain a value of 550 Hz.

Molten ammonium nitrate under the conditions of the experiment has a surface tension of 0.1 N.m$^{-1}$ and a density of 1400 kg.m$^{-3}$. The distance from the start of the stream at which disintegration occurs has been observed to be 0.2 m. Substituting the parameters into expression 7 gives a value of 0.1 microns as the theoretical minimum amplitude for the controlled disturbance.

The plate (3) was perturbed by inducing a lateral vibration through the sprayhead (2) of an amplitude of 17 microns, which corresponds to an angle of rotation of the sprayhead (2) about a vertical axis of about 2 × 10$^{-4}$ radians.

The frequency of the vibration used was 560 Hz.

Samples of the resulting prills were obtained, from which a size distribution was generated. The mean size of prill produced (by mass) was 2.35 mm, with a standard deviation of 0.1 mm.

EXAMPLE 2

The same operating unit was used, under the same conditions of ammonium nitrate flow as in Example 1, but with a frequency of controlled vibrations of 480 Hz.

Samples of prills were again taken for size analysis.

The mean size of prill produced (by mass) was 2.45 mm, with a standard deviation of 0.15 mm.

EP 0 320 153 B1

## EXAMPLE 3

In comparison with Examples 1 and 2, when the same operating unit was used, under the same conditions of ammonium nitrate flow, but without the application of controlled vibrations it was found that the size distribution of the prills produced was broader than that obtained for the prills of Examples 1 and 2.

The mean size of prill produced (by mass) was 2.4 mm with a standard deviation of 0.6 mm.

## EXAMPLE 4

In a second unit for the production of fertiliser grade ammonium nitrate the plate (3) through which molten ammonium nitrate was prilled comprised 2800 holes of 1.3 mm diameter.

The velocity at which molten ammonium nitrate flowed through each hole was 4.0 m/s.

The optimum frequency at which to apply a controlled lateral disturbance to the sprayhead (2) was calculated as 684 Hz.

The plate (3) was perturbed by inducing a lateral vibration through the sprayhead (2) of an amplitude of 17 microns.

The frequency of the vibration used was 670 Hz.

Samples of the resulting prills were obtained from which a size distribution was generated.

The mean size of prill produced (by mass) was 2.34 mm, with 0.5% of the prills produced being smaller than 1.4 mm.

## EXAMPLE 5

The same operating unit was used as in Example 4, but with a frequency of controlled vibrations of 690 Hz.

The mean size of prills produced (by mass) was 2.30 mm, with 0.5% of the prills produced being smaller than 1.4 mm.

## EXAMPLE 6

The same operating unit was used as in Example 4, but with a frequency of controlled vibrations of 680 Hz.

The mean size of prills produced (by mass) was 2.37 mm, with 0.2% of the prills produced being smaller than 1.4 mm.

## EXAMPLE 7

The same operating unit was used as in Example 4, but without the application of controlled vibrations.

The mean size of prills produced (by mass) was 2.36 mm with 1.5% of the prills produced being smaller than 1.4 mm.

Thus we have shown by the application of controlled vibrations to a sprayhead used in the prilling of molten ammonium nitrate, prills having fewer fines may be produced, and by using a controlled vibration close to the optimum frequency prills having the fewest fines are produced.

## Claims

1. A process for the controlled break-up of liquid jets to produce substantially spherical drops in which a jet is caused to flow through an orifice in a plate, characterised in that as the jet flows through the orifice the plate is caused to move reciprocally in a horizontal plane producing an asymmetric disturbance to the jet surface, and that the frequency of the reciprocal movement of the plate is determined by the expression

$$f = u_j.(4.5\ dj)^{-1}$$

wherein f is the frequency of reciprocal movement (Hz), $u_j$ is the jet flow velocity through the orifice (m.s$^{-1}$), and $d_j$ is the orifice diameter (m).

2. A process for the controlled break-up of liquid jets to produce substantially spherical drops in which a jet is caused to flow through an orifice in a plate, characterised in that as the jet flows through the orifice the

6

plate is caused to move reciprocally in a horizontal plane producing an asymmetric disturbance to the jet surface, and that the frequency of the reciprocal movement of the plate is between 400 and 800 Hz.

3. A process according to either claim 1 or claim 2 wherein said plate comprises between $10^3$ and $4 \times 10^3$ orifices.

4. A process according to any one of claims 1 to 3 wherein the reciprocal movement is equivalent to an angle of rotation of between $10^{-5}$ and $10^{-3}$ radians.

5. A process according to any one of claims 1 to 4 wherein the Reynolds number, as hereinbefore defined, does not exceed 2300.

6. A process according to any one of claims 1 to 5 wherein the liquid has a viscocity in the range 1 to 10 cP.

7. A process according to any one of claims 1 to 6 wherein the liquid is substantially molten ammonium nitrate, or urea, or sodium hydroxide.

## Patentansprüche

1. Verfahren für das gesteuerte Zerteilen von Flüssigeitsstrahlen zum Herstellen im wesentlichen kugelförmiger Tropfen, bei dem bewirkt wird, daß ein Strahl durch eine in einer Platte befindliche Öffnung hindurchfließt, *dadurch gekennzeichnet*, daß die Platte, während der Strahl durch die Öffnung hindurchfließt, dazu veranlaßt wird, eine hin- und hergehende Bewegung in einer waagerechten Ebene auszuführen, wodurch eine asymmetrische Störung der Strahloberfläche hervorgerufen wird, und daß die Frequenz der hin- und hergehenden Bewegung der Platte durch den Ausdruck

$$f = u_j . (4,5 \, d_j)^{-1}$$

festgelegt wird, worin f die Frequenz (Hz) der hin- und hergehenden Bewegung, $u_j$ die Durchflußgeschwindigkeit (m.s$^{-1}$) des Strahls durch die Öffnung und d- der Öffnungsdurchmesser (m) ist.

2. Verfahren für das gesteuerte Zerteilen von Flüssigkeitsstrahlen zum Herstellen im wesentlichen kugelförmiger Tropfen, bei dem bewirkt wird, daß ein Strahl durch eine in einer Platte befindliche Öffnung hindurchfließt, *dadurch gekennzeichnet*, daß die Platte, während der Strahl durch die Öffnung hindurchfließt, dazu veranlaßt wird, eine hin- und hergehende Bewegung in einer waagerechten Ebene auszuführen, wodurch eine asymmetrische Störung der Strahloberfläche hervorgerufen wird, und daß die Frequenz der hin- und hergehenden Bewegung der Platte zwischen 400 und 800 Hz liegt.

3. Verfahren nach Anspruch 1 oder Anspruch 2, bei dem die Platte $10^3$ bis $4 \times 10^3$ Öffnungen enthält.

4. Verfahren nach einem der Ansprüche 1 bis 3, bei dem die hin- und hergehende Bewegung einem Drehwinkel von $10^{-5}$ bis $10^{-3}$ rad äquivalent ist.

5. Verfahren nach einem der Ansprüche 1 bis 4, bei dem die vorstehend definierte Reynoldssche Zahl nicht höher als 2300 ist.

6. Verfahren nach einem der Ansprüche 1 bis 5, bei dem die Flüssigkeit eine Viskosität hat, die in dem Bereich von 1 bis 10 cP liegt.

7. Verfahren nach einem der Ansprüche 1 bis 6, bei dem die Flüssigkeit im wesentlichen geschmolzenes Ammoniumnitrat oder Harnstoff oder Natriumhydroxid ist.

## Revendications

1. Procédé de division contrôlée de jets de liquide pour produire des gouttes sensiblement sphériques, et selon lequel un jet est amené à traverser un orifice ménagé dans une plaque, caractérisé en ce que, lorsque le jet traverse l'orifice, on déplace en va-et-vient la plaque dans un plan horizontal en produisant une perturbation asymétrique de la surface du jet, et on détermine la fréquence du déplacement alternatif de la plaque conformément à l'expression

$$f = u_j . (4,5 \, dj)^{-1}$$

f étant la fréquence du déplacement alternatif (Hz), $u_j$ la vitesse d'écoulement du jet dans l'orifice (m.s$^{-1}$) et $d_j$ le diamètre de l'orifice (m).

2. Procédé de division contrôlée de jets de liquide pour produire des gouttes sensiblement sphériques, et selon lequel un jet est amené à traverser un orifice ménagé dans une plaque, caractérisé en ce que, lorsque

7

le jet traverse l'orifice, on déplace en va-et-vient la plaque dans un plan horizontal en produisant une perturbation asymétrique de la surface du jet, et que la fréquence du déplacement alternatif de la plaque est comprise entre 400 et 800 Hz.

3. Procédé selon l'une des revendications 1 ou 2, selon lequel la plaque comprend entre $10^3$ et $4 \times 10^3$ orifices.

4. Procédé selon l'une quelconque des revendications 1 à 3, dans lequel le déplacement alternatif est équivalent à un angle de rotation compris entre $10^{-5}$ et $10^{-3}$ radians.

5. Procédé selon l'une quelconque des revendications 1 à 3, dans lequel le nombre de Reynolds, tel que défini précédemment, ne dépasse pas 2300.

6. Procédé selon l'une quelconque des revendications 1 à 5, selon lequel le liquide possède une viscosité comprise dans la gamme allant de 1 à 10 cP.

7. Procédé selon l'une quelconque des revendications 1 à 6, selon lequel le liquide est du nitrate d'ammonium à l'état sensiblement fondu ou de l'urée ou de l'hydroxyde de sodium.

Fig.1

Fig.2

Fig.5

EP 0 320 153 B1

# Fig.3

# Fig.4

EP 0 320 153 B1

## Fig.6

## Fig.7